# EUROPEAN PATENT APPLICATION

(11) **EP 2 492 604 A1**
(43) Date of publication of application: **29.08.2012**
(21) Application number: 12001051.7
(22) Date of filing: 17.02.2012
(51) Int. Cl.: F24F 11/00, F24F 12/00

(54) **Ventilation unit, method for manufacturing a ventilation unit and method for cooling an accommodation or dwelling**

(30) Priority: 22.02.2011 BE 201100124
(71) Applicant: Aeropulmo, besloten vennotschap met Beperkte aansprakelijkheid, 2900 Schoten (BE)
(72) Inventor: Frencken, Guter Yvonne A, 2520 Ranst (BE)
(74) Representative: Donné, Eddy

(57) **Abstract**

A ventilation unit (1) that comprises means (10) for the forced supply of air through a supply channel (7), and means (11) for the forced extraction of air through an exhaust channel (8), whereby the supply channel (7) and exhaust channel (8) are separate channels that are connected together in a heat-exchanging way by means of a heat exchanger (9), and in which a closable bypass channel (12) that bypasses the heat exchanger (9) is provided in the exhaust channel (8) or supply channel (7), whereby the ventilation unit (1) is provided with control means (13, 15) to regulate the temperature (T₁₅) of the air supplied to the space according to a certain limit (Tg) by adjusting the flow resistance in the bypass channel (12).

## Description

The present invention relates to a ventilation unit, a method for manufacturing a ventilation unit and a method for cooling an accommodation or dwelling.

In houses, but also in other relatively small dwellings such as classrooms, offices, production areas and showrooms, balanced ventilation with heat recovery is increasingly being used for energy-saving reasons.

Balanced ventilation means that two separate channels are used for ventilation, each with its own fan, where one channel is for the air exhaust from the space, and the other for the supply of fresh air into the space. The airflow rates can be relatively high, not least on account of legal requirements. The channels are separate, in the sense that there is no possibility of air recirculating from the exhaust channel to the supply channel.

A ventilation unit for balanced ventilation normally consists of a housing affixed in the house in which there is a supply channel with a fan and an exhaust channel with a fan, as well as a controller, and to which pipes can be attached for the supply and extraction of air through the shell of the building, and for the distributed extraction or supply of air at different places in the house.

A disadvantage of such a balanced ventilation unit is that a relatively large amount of energy is lost from the space, because cold air is often brought into the space and heated air is removed from the space.

The solution to this is the provision of a heat exchanger between the two channels, so that the warm outgoing air heats the cold incoming air. This heat exchanger is also in the ventilation unit.

However, such heating is not always desirable. When the temperature in the space rises above a certain temperature, cooling is desirable, and the incoming air, when it is at a lower temperature than the outgoing air, must not go through the heat exchanger, because then the cooling effect would be largely eliminated.

This can be prevented by providing a closable bypass channel that bypasses the heat exchanger in the inlet channel. When heat exchange is desired, the bypass channel is closed such that the air is guided through the heat exchanger. When cooling is desired, the bypass channel is opened. Because the heat exchanger presents a higher flow resistance than the open bypass channel, the air supply prefers to flow into the space via the bypass channel, thus avoiding the heat exchanger.

Ventilation units of this type are widely known.

A disadvantage of such ventilation units is related to the fact that air that is too cold, typically below 15°C, cannot be brought inside because condensation could then occur on the outside of the pipes in the interior space, with all kinds of problems related to this, such as moisture damage, corrosion, and mould formation. To this end, the known ventilation units have protection that closes the bypass channel when the temperature of the incoming air is less than a stipulated limit, for example the said 15°C, so that the incoming air is guided through the heat exchanger.

However, this means that in many climates, such as in central and northern Europe, where on many nights, even in summer, it can be colder than 15°C, and there are no or only brief opportunities for cooling with the known ventilation units, while the cooling of the space, which can be heated to an uncomfortable level during the day, is indeed desired.

For some users and some applications, temperatures higher than the above limit, although technically acceptable to avoid condensation, are still too low for comfort, so that they have to switch off the ventilation unit, accept an uncomfortable situation, or must set the temperature limit higher, such that the effective periods in which cooling is possible is further reduced.

The purpose of the present invention is to provide a solution to at least one of the aforementioned and other disadvantages, by providing a ventilation unit for an accommodation or dwelling that comprises means for the forced supply of air from outside the space into the space through a supply channel, and means for the forced extraction of air from the space through an exhaust channel, whereby the supply channel and exhaust channel are separate channels that are connected together in a heat-exchanging way by means of a heat exchanger, and in which a closable bypass channel that bypasses the heat exchanger is provided in the exhaust channel or supply channel, whereby the ventilation unit is provided with means to regulate the temperature of the air supplied to the space according to a certain limit by adjusting the flow resistance in the bypass channel.

As a result greater flexibility of the temperature of the air brought into the space is obtained, because in contrast to the known ventilation units, this air can be guided partly through and partly around the heat exchanger.

It is clear here that for good operation, the bypass channel bypasses the heat exchanger so that air that goes through the supply channel or exhaust channel can entirely or partially flow through the bypass channel in the same direction. The ventilation unit is arranged such that the bypass channel must not be regarded as and/or cannot act as a return channel through which air can be sent back to a position more upstream in the supply channel or exhaust channel.

In a preferred embodiment the means are control means to regulate the temperature of the air brought into the space according to a certain limit by adjusting the flow resistance in the bypass channel.

This has the advantage that the temperature of the air brought into the space can be regulated according to a certain limit, which can follow from technical or comfort considerations.

As a result, the feeling of comfort is increased, while the period in which the space can be cooled by supplying cool air, and thus the useable cooling time of the ventilation unit, is extended.

In cases where the required quantity of cooling is limited, the ventilation unit can also operate with a lower air speed, thereby avoiding draughts and noise.

A further advantage is that for a long time the airflow will at least partly go through the bypass channel, which results in a lower flow resistance and thus lower energy consumption.

In a preferred embodiment there is a closable bypass channel in each of the supply channel and exhaust channel, and the ventilation unit has control means to regulate the temperature of the air brought into the space according to a certain limit by adjusting the flow resistance in both bypass channels.

This has the advantage that if no or only limited heat exchange is required, both the incoming and outgoing airflows can flow entirely or largely through the bypass channels, such that a lower flow resistance, and thus a lower electricity consumption, is obtained for both fans.

In a preferred embodiment the control means comprise a controllable valve in each bypass channel and a temperature sensor, whereby each valve is controlled on the basis of the temperature measured by the temperature sensor.

This is an easy, automatic and direct way to regulate the temperature of the air brought into the space according to a certain limit.

Preferably the closability of each bypass channel is obtained by means of the controllable valve in that bypass channel.

This has the advantage that the controllable valve not only provides the control function, but can also completely close the bypass channel, as is needed during the operation of the ventilation unit in periods that cold incoming air must be heated. A separate shutoff valve is thus superfluous here.

In a further preferred embodiment a ventilation unit is constructed without further cooling or heating facilities for the air brought in, apart from the heat exchanger.

The invention also relates to a method for manufacturing a ventilation unit as described, whereby a ventilation unit for an accommodation or dwelling that comprises means for the forced supply of air from outside the space into the space through a supply channel, and means for the forced extraction of air from the space through an exhaust channel, whereby the exhaust channel and supply channel are separate channels that are connected together in a heat-exchanging way by means of a heat exchanger, and in which there is a closable bypass channel that bypasses the heat exchanger in the exhaust channel or supply channel, and the bypass channel is equipped with a controllable valve that can adjust the flow resistance in the bypass channel.

Furthermore the invention concerns a method for cooling an accommodation or dwelling when air outside the space is at a lower temperature than air in the space, by simultaneously bringing air from outside the space into the space and taking air from inside the space to outside the space by means of a ventilation unit, which comprises means for the forced supply of air from outside the space into the space through a supply channel and means for the forced extraction of air from the space through an exhaust channel, whereby the supply channel and exhaust channel are separate channels that are connected together in a heat-exchanging way by means of a heat exchanger, and in which a closable bypass channel that bypasses the heat exchanger is provided in the exhaust channel or supply channel, whereby the flow resistance in the bypass channel is adjusted.

With the intention of better showing the characteristics of the invention, preferred embodiments of a ventilation unit according to the invention, and a method for cooling an accommodation or dwelling, are described hereinafter by way of an example, without any limiting nature, with reference to the accompanying drawings, wherein:
figure 1 schematically shows a cross-section of a ventilation unit according to the invention in a first operating state;

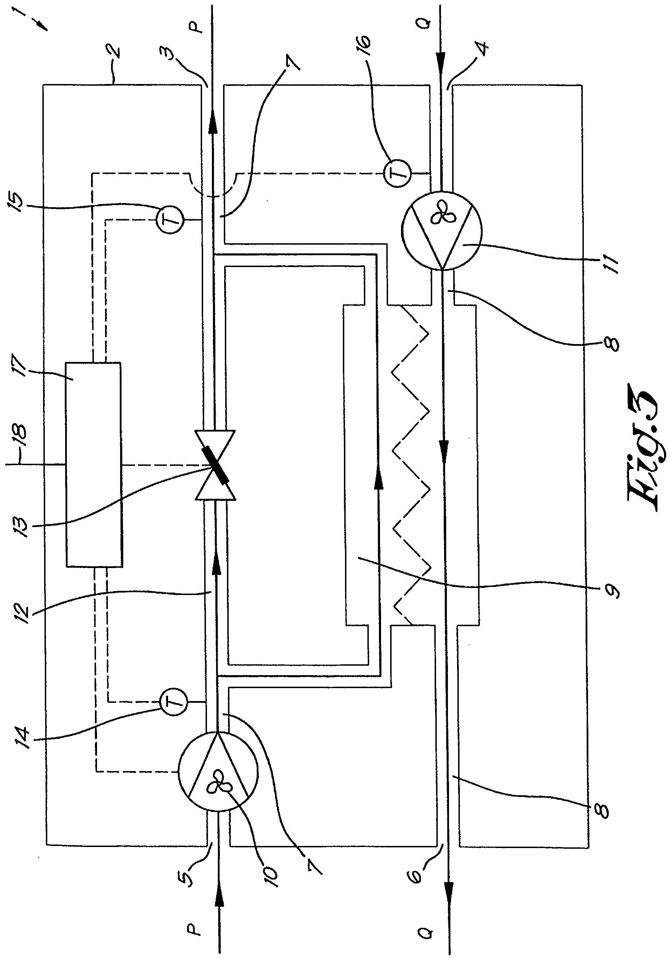

figures 2 and 3 show the ventilation unit of figure 1 in two other operating states;
figures 4 and 5 schematically show alternative embodiments of a ventilation unit according to the invention.

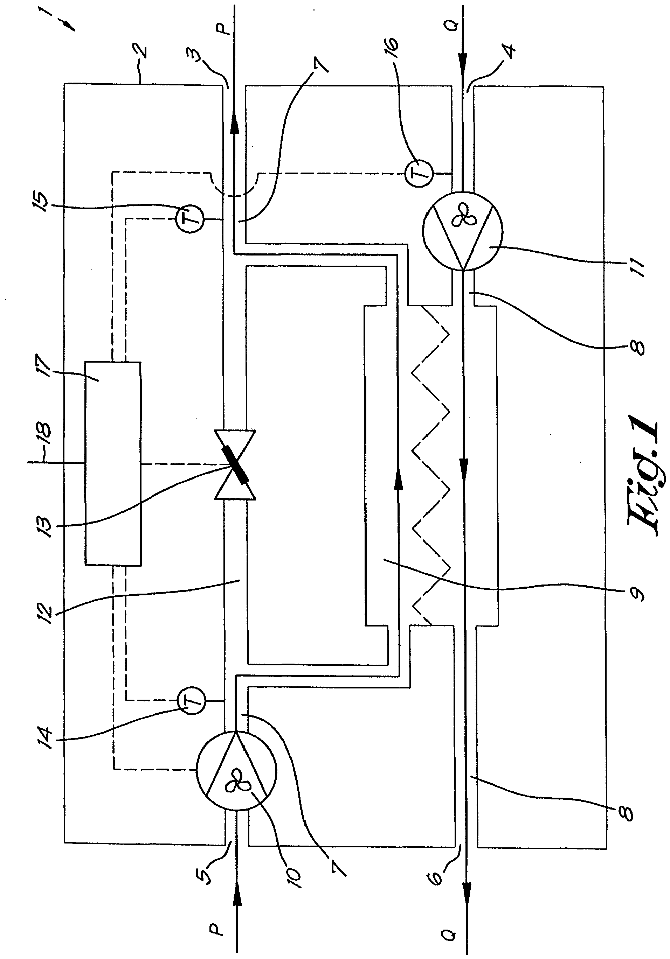

The ventilation unit shown in figure 1 consists of a housing 2 with four connection points 3,4,5,6 for pipes. In the housing there is a supply channel 7 between connection points 3 and 5, and an exhaust channel 8 between connection points 4 and 6.

The supply channel 7 and exhaust channel 8 are connected together in a heat-exchanging way by means of a heat exchanger 9. The heat exchanger 9 is schematically shown in the drawings, but in reality has a form that provides a large heat exchanging area.

There is a fan 10, 11 in each of the supply channel 7 and exhaust channel 8.

In the supply channel 7 there is a bypass channel 12 that runs from a position between the fan 10 and the heat exchanger 9 to a position between the heat exchanger 9 and connection point 3, and thus bypasses the heat exchanger.

The bypass channel 12 has a driven, controllable valve 13.

In the exhaust channel 7 between the fan 10 and the branch to the bypass channel 12, there is a temperature sensor 14. There is also a temperature sensor 15 between the other branch to the bypass channel 12 and the connection point 3.

There is a temperature sensor 16 in the exhaust channel 8 between the connection point 4 and the fan 11.

The temperature sensors 14, 15, 16 are connected to an electronic control unit 17 such that the control unit 17 can read the temperatures measured by the temperature sensors 14, 15, 16. The control unit is connected to the valve 13 and the fans 10 and 11, in such a way that the control unit 17 can control them.

The control unit 17 has a data exchange connection 18 to the outside.

The operation of the ventilation unit 1 is very simple and as follows.

The ventilation unit 1 is connected to pipes in a house, such that the pipes connected to connection points 5 and 6 are connected to the outside air, the pipe connected to the connection point 3 is connected to the desired air inlet points in the house, and the pipe connected to the connection point 4 is connected to the desired extraction points in the house.

The control unit 17 is set to have both fans 10, 11 operate such that the airflow through the exhaust channel and the airflow through the supply channel are equal. The fans have various speed settings that can be selected manually or automatically by the user of the ventilation unit 1 via the data exchange link 18 on the basis of a selection algorithm.

The user and/or installer of the ventilation unit 1 has also set a minimum and maximum temperature Tₘᵢₙ and Tₘₐₓ and a limit temperature Tg in the control unit. Tₘᵢₙ is the temperature of the house, below which the user wants to heat his house, Tₘₐₓ is the temperature of his house above which he wants to cool it, and Tg is the minimum temperature that the supplied outside air must be before it is brought in through the pipe connected at the connection point 3, in order not to cause any condensation and/or not to make the user uncomfortable.

When both fans 10, 11 are operating, air is extracted from the house through the exhaust channel 8, and guided to the outside via the heat exchanger 9. At the same time, fresh outside air is guided to the house through supply channel 7 via the heat exchanger 9 and/or through the bypass channel 12.

If, as is usual in winter, the temperature measured by temperature sensor 16, thus the temperature of the air extracted from the house, hereinafter called T₁₆, is below Tₘᵢₙ, the control unit 17 controls the valve 13 such that it is fully closed.

As a result, all air supplied by the fan 10 is guided through the heat exchanger and not through the bypass channel 12. In the heat exchanger this air absorbs heat from the air that simultaneously flows through the exhaust channel 8, such that the fresh air is brought into the house through the pipe connected at the connection point 3 at a higher temperature than the outside temperature. This operating state is shown in figure 1, whereby the airflow in the supply channel 7 is indicated by arrow P and the airflow in the exhaust channel 8 is indicated by arrow Q.

If cooling of the house is desired, which is indicated by T₁₆ being higher than Tₘₐₓ, and it is possible, which is indicated by the temperature measured by temperature sensor 14, hereinafter called T₁₄, being less than T₁₆, two situations can arise.

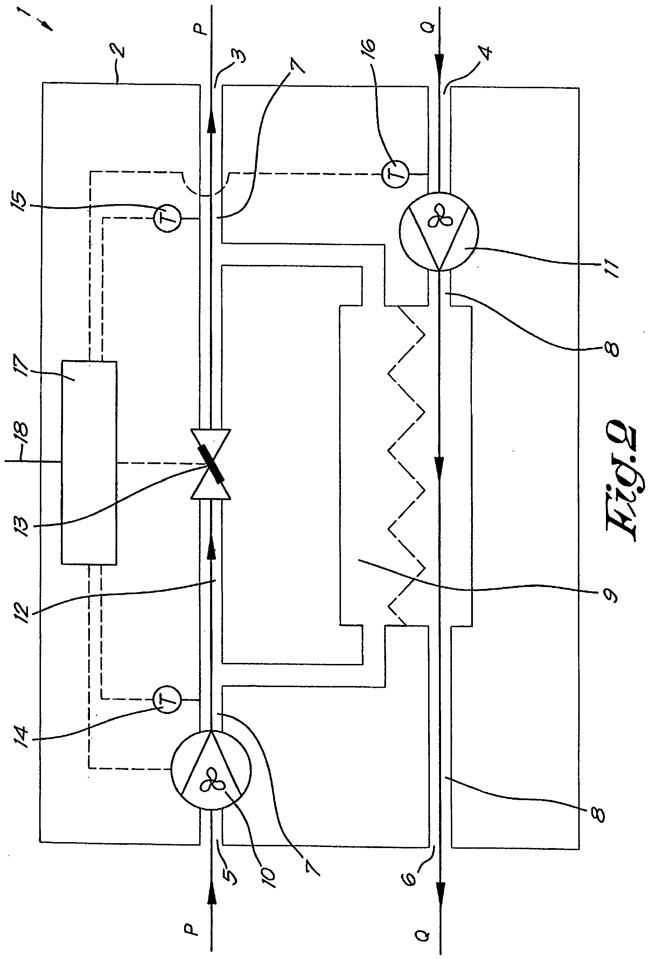

On the one hand, T₁₄ can be greater than or equal to Tg, in which case the valve 13 is fully opened by the control unit 17, such that the entire flow of air supplied flows through the bypass channel 12, thereby achieving maximum cooling capacity and minimum energy consumption of the fan 10, due to the limited flow resistance. This operating state is shown in figure 2.

On the other hand, T₁₄ can be less than Tg, in which case the position of the valve 13 is controlled by the control unit such that the temperature measured by the temperature sensor 15, hereinafter called T₁₅, is regulated according to Tg.

This is done by closing the valve 13 so far that the air supplied flows partly through the heat exchanger 9 and partly through the bypass channel 12. This valve 13 is closed further if T₁₅ is further below Tg than allowed by a control algorithm used for this purpose, such that the flow resistance of the bypass channel 12 is increased, which results in a greater proportion of the air supplied being guided through the heat exchanger 9, whereby the temperature of the air supplied to the house is increased.

The control of T₁₅ in the other direction is done in the reverse, thus by further opening the valve 13.

Instead of providing a bypass channel 12 on the supply pipe 7, a similar bypass channel 12 with controllable valve 13 can be provided on the exhaust channel 8.

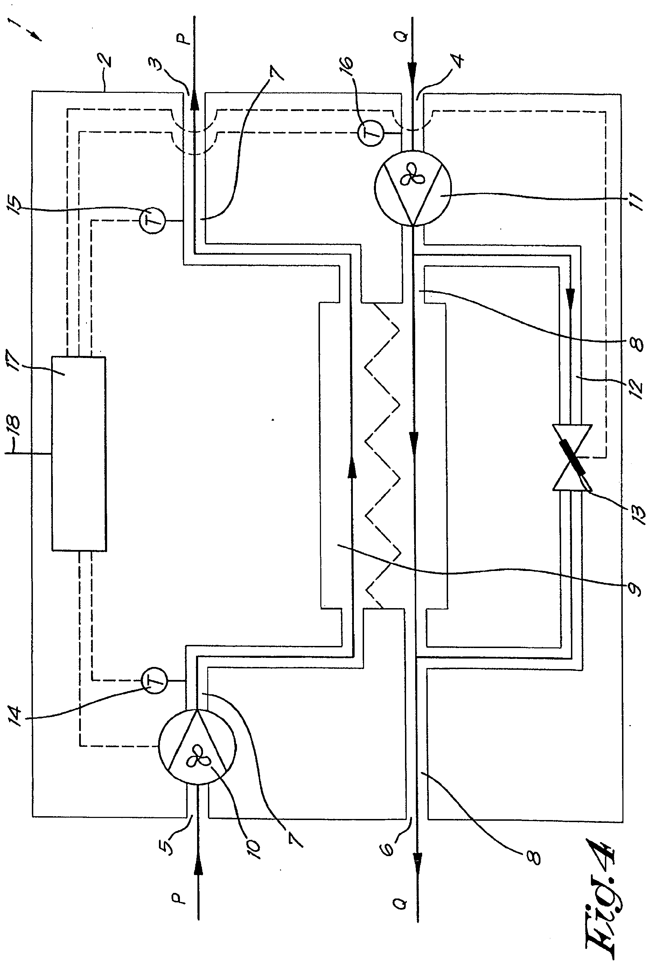

Similar to that described above, the flow of the exhaust air through the heat exchanger 9 can thereby be avoided or limited, such that the controllability of the temperature of the air supplied is obtained. This is shown in figure 4.

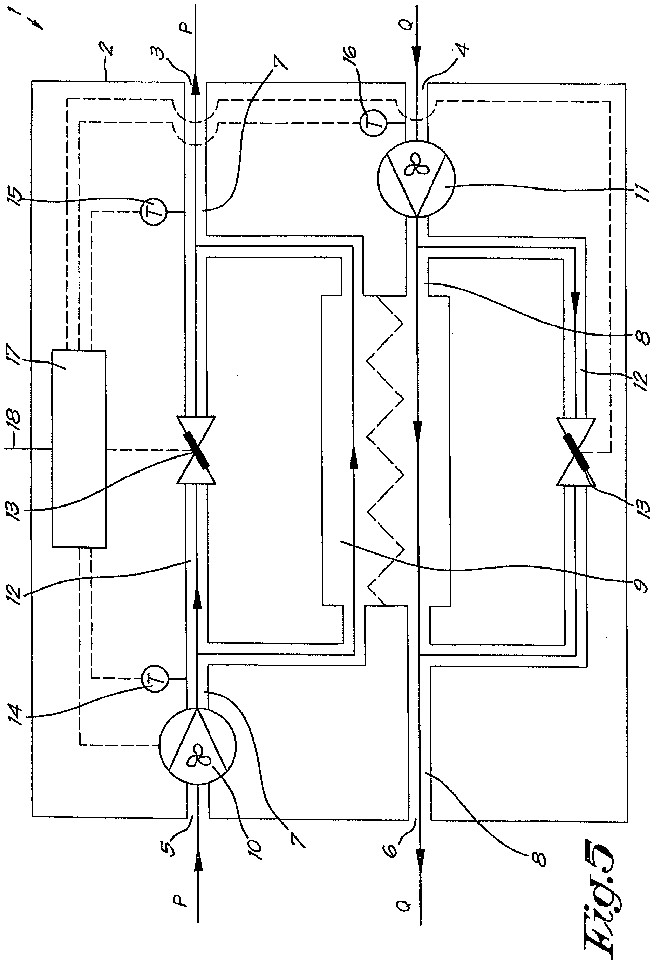

Figure 5 shows an alternative embodiment of the ventilation unit 1 with a bypass channel 12 on both the supply channel 7 and the exhaust channel 8.

The use of this ventilation unit differs from that of the above, because both valves 13 are controlled to an equal extent, thus open or closed, or in an intermediate controlling position by the control unit 17.

Other control algorithms, such as the use of the two valves 13 for a first coarse control and the other valve 13 for a finer control are also possible here.

Instead of only using a closable control valve 13 in a bypass channel 12 as described above, a separate shutoff valve with only an open and closed position can be provided in a bypass channel 12.

The control unit 17, which above forms part of the ventilation unit 1, can also be provided externally, and/or form part of a more encompassing control system for the interior climate in a space.

It will be clear to a person skilled in the art that the valve or valves 13 can only regulate the temperature of the air brought into the house according to Tg as long as the outside air temperature is less than Tg, and that this regulation is only desired, and hence only activated, if the house has to be cooled, and hence is not used when the house is being heated.

The temperature sensors 14, 15, 16 are placed in the ventilation unit in the above embodiments. However they can also be placed outside the system, for example at an intake point outside or inside the house.

The present invention is by no means limited to the embodiments described as an example and shown in the drawings, but a ventilation unit and methods according to the invention can be realised in all kinds of variants, without departing from the scope of the invention.

## Claims

1. A ventilation unit (1) for an accommodation or dwelling that comprises means (10) for the forced supply of air from outside the space into the space through a supply channel (7), and means (11) for the forced extraction of air from the space through an exhaust channel (8), whereby the supply channel (7) and exhaust channel (8) are separate channels that are connected together in a heat-exchanging way by means of a heat exchanger (9), and in which a closable bypass channel (12) that bypasses the heat exchanger (9) is provided in the exhaust channel (8) or supply channel (7), **characterised in that** the ventilation unit (1) is provided with means (13) to adjust the flow resistance in the bypass channel (12).

2. A ventilation unit (1) according to claim 1, **characterised in that** the means (13) are control means (13, 15) to regulate the temperature (T₁₅) of the air brought into the space according to a certain limit (Tg) by adjusting the flow resistance in the bypass channel (12).

3. A ventilation unit (1) according to claim 1 or 2, **characterised in that** at least one of the means for forced air supply and/or means for forced air extraction essentially consists of a fan (10, 11).

4. A ventilation unit (1) according to any of the previous claims, **characterised in that** the bypass channel (12) is provided in the supply channel (7).

5. A ventilation unit (1) according to any of the claims 1 to 3, **characterised in that** the bypass channel (12) is provided in the exhaust channel (7).

6. A ventilation unit (1) according to any of the claims 1 to 3, **characterised in that** each of the supply channel (7) and exhaust channel (8) is equipped with a closable bypass channel (12) and that the ventilation unit (1) is provided with control means (13) in order to regulate the temperature (T₁₅) of the air brought into the space according to a certain limit (Tg) by adjusting the flow resistance in both bypass channels (12).

7. A ventilation unit (1) according to any of the previous claims, **characterised in that** the control means (13) comprise a controllable valve (13) in each bypass channel (12) and a temperature sensor (15), whereby each valve (13) is controlled on the basis of the temperature measured by the temperature sensor (15).

8. A ventilation unit (1) according to claim 7, **characterised in that** the closability of each bypass channel (12) is obtained by means of the controllable valve (13) **in that** bypass channel (12).

9. A ventilation unit according to claim 7 or 8, **characterised in that** the temperature sensor (15) is placed in the supply channel (7) at a position downstream from the heat exchanger (9), and if a bypass channel (12) is provided in the supply channel (7), it is also provided at the junction of the bypass channel (12) and the supply channel (7) located downstream from the heat exchanger (9).

10. Method for manufacturing a ventilation unit (1) according to any of the claims 1 to 9, **characterised in that** a ventilation unit for an accommodation or dwelling that comprises means (10) for the forced supply of air from outside the space into the space through a supply channel (7), and means (11) for the forced extraction of air from the space through an exhaust channel (8), whereby the supply channel (7) and exhaust channel (8) are separate channels that are connected together in a heat-exchanging way by means of a heat exchanger (9), and in which there is a closable bypass channel (12) that bypasses the heat exchanger (9) in the exhaust channel (8) or supply channel (7), and the bypass channel (12) is equipped with a controllable valve (13) that can adjust the flow resistance in the bypass channel (12).

11. Method according to claim 10, **characterised in that** the controllable valve can be controlled to regulate the temperature (T₁₅) of the air that is brought into the space according to a certain limit (T_{g}).

12. Method according to claim 10 or 11, **characterised in that** additionally the means to ensure the closability of the bypass channel are replaced by the controllable valve (13) and that the controllable valve (13) is suitable for closing the bypass channel (12).

13. Method for cooling an accommodation or dwelling when air outside the space is at a lower temperature than the air in the space, by simultaneously bringing air from outside the space into the space and by taking air from inside the space to the outside by means of a ventilation unit that comprises means (10) for the forced air supply from outside the space into the space via a supply channel (7) and means (11) for forced air extraction from the space via an exhaust channel (8), whereby the supply channel (7) and exhaust channel (8) are separate channels that are connected together in a heat-exchanging way by means of a heat exchanger (9), and in which a closable bypass channel (12) that bypasses the heat exchanger (9) is provided in the exhaust channel (8) or supply channel (7), **characterised in that** the flow resistance of the bypass channel (12) is adjusted.

14. Method according to claim 13, **characterised in that** the flow resistance of the bypass channel (12) is adjusted such that the temperature (T₁₅) of the air brought into the space is regulated according to a certain limit (Tg).
